# EUROPEAN PATENT APPLICATION

(11) **EP 4 807 167 A1**
(43) Date of publication of application: **16.09.2026**
(21) Application number: 25209127.7
(22) Date of filing: 16.10.2025
(51) Int. Cl.: F02K 9/96, G01M 9/04

(54) **SUPERSONIC DIFFUSER DEVICE**

(30) Priority: 13.03.2025 KR 20250032451
(71) Applicant: Korea Aerospace Research Institute, Daejeon 34133 (KR)
(72) Inventor: KIM, Chaehyoung, 34133 Daejeon (KR)
(74) Representative: Kraus & Lederer PartGmbB

(57) **Abstract**

Provided is a supersonic diffuser device. The supersonic diffuser device, which has one side coupled to a rocket engine nozzle part including a throat and discharging a supersonic exhaust gas and the other side exposed to atmosphere, includes: a cover part having one side coupled to the rocket engine nozzle part and having a hollow formed therein; and an insert inserted into the hollow to have a predetermined gap from the cover part, wherein, between the cover part and the insert, an expansion part in which a vacuum region is formed, a second throat part, and a discharge part in contact with the outside are sequentially defined from an upstream side.

## Description

### CROSS-REFERENCE TO RELATED APPLICATIONS

This application claims priority under 35 U.S.C. §119 to Korean Patent Application No. 10-2025-0032451, filed on March 13th 2025, in the Korean Intellectual Property Office, the disclosure of which is incorporated herein by reference in its entirety.

### TECHNICAL FIELD

The following disclosure relates to a supersonic diffuser device for simulating high-altitude flight, and more particularly, to a supersonic diffuser device including an insert having a spike shape, the ends of which are rounded.

### BACKGROUND

An engine operated at a high altitude is started and operated in an environment having a pressure lower than atmospheric pressure, and therefore ground-based engine testing is difficult. Such an engine is designed to achieve optimal performance at a high altitude, and conducting the engine test under atmospheric pressure on the ground may make proper engine testing impossible. To solve this problem, a test facility for simulating a high altitude is required. A supersonic diffuser may be used to reproduce a low-pressure environment and to simulate engine performance at a high altitude. Although various types of supersonic diffusers are provided, a second throat supersonic diffuser is most widely used among the various types of supersonic diffusers.

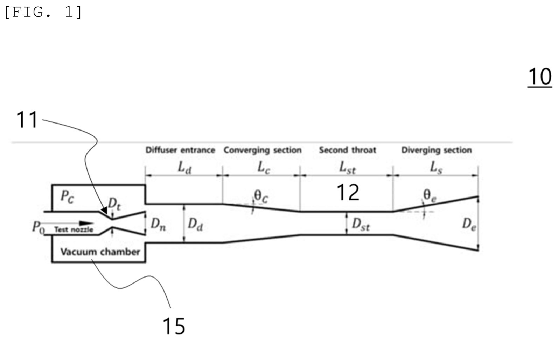

FIG. 1 illustrates a conventional second throat supersonic diffuser 10. The second throat supersonic diffuser 10 may have a long pipe shape and include a throat where a cross-sectional area of the pipe is reduced at two sections. A first throat 11 may be connected to an engine and serve to reduce a pressure of a supersonic fluid introduced from the engine and to rapidly increase a velocity of the supersonic fluid. A second throat 12 may serve to increase the pressure of the fluid and to reduce the velocity.

The second throat supersonic diffuser 10 is required to include a vacuum chamber 15. In addition, to smoothly adjust the pressure by using the first throat 11 and the second throat 12, a pipe length ( 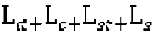 ) may be several to several tens of times longer than an outlet diameter( 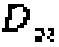 ) of an engine nozzle, thus requiring a large space. Accordingly, construction of the facility may require a large amount of cost and time.

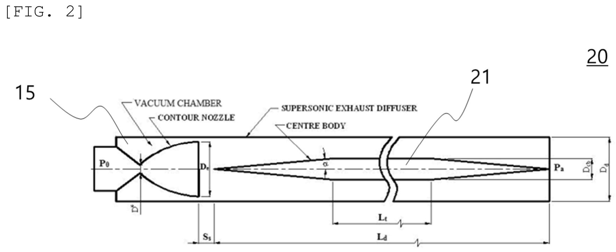

To compensate for such disadvantages, a center-body supersonic diffuser is sometimes utilized. FIG. 2 illustrates a conventional center-body supersonic diffuser 20.

The center-body supersonic diffuser 20 may be used as an attempt to compensate for the disadvantages of the second throat supersonic diffuser. However, the center-body supersonic diffuser 20 requires a vacuum chamber 25, has a long pipe length( 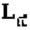 ), and still requires a large space. In addition, the center-body supersonic diffuser 20 requires a cooling system because a center body 21 is required to be installed inside the supersonic diffuser through which a high-temperature fluid flows, and it is difficult to support the heavy center body 21.

As described above, the conventional test apparatus for simulating a high-altitude environment requires a large space, and a large amount of cost and time to be invested in testing. However, as a field of small launch vehicles has recently grown rapidly, a test apparatus capable of responding to various rocket nozzle shapes and efficient in terms of space, cost, and time is required.

### SUMMARY

An embodiment of the present disclosure is directed to providing a supersonic diffuser device capable of simulating a high-altitude environment even without a long pipe length.

In addition, an embodiment of the present disclosure is directed to providing a supersonic diffuser device which is structurally simple and capable of being easily manufactured.

In addition, an embodiment of the present disclosure is directed to providing a supersonic diffuser device which is capable of flexibly responding to various rocket nozzle shapes and operating conditions.

In addition, an embodiment of the present disclosure is directed to providing a supersonic diffuser device which is capable of efficiently controlling and stabilizing a flow of a supersonic fluid to accurately simulate a high-altitude environment.

Technical aspects of the present disclosure are not limited to those mentioned above, and other aspects not mentioned here may be clearly understood by those skilled in the art from the following description.

In one general aspect, a supersonic diffuser device, which has one side coupled to a rocket engine nozzle part including a throat and discharging a supersonic exhaust gas and the other side exposed to atmosphere, includes: a cover part having one side coupled to the rocket engine nozzle part and having a hollow formed therein; and an insert inserted into the hollow to have a predetermined gap from the cover part, wherein, between the cover part and the insert, an expansion part in which a vacuum region is formed, a second throat part, and a discharge part in contact with the outside are sequentially disposed from an upstream side defined based on a flow direction of the exhaust gas.

The cover part may include a first cover part coupled to the rocket engine nozzle part and combined with the insert to form the expansion part, a second cover part extending from the first cover part and combined with the insert to form the second throat part, and a third cover part extending from the second cover part and combined with the insert to form the discharge part, and cross-sectional areas of the cover parts may be sequentially provided in a descending order of the third cover part, the second cover part, and the first cover part.

Lengths of the cover parts may be sequentially provided in a descending order of the second cover part, the third cover part, and the first cover part.

The insert may include a first body part disposed in a region corresponding to the first cover part and the second cover part, and a second body part disposed in a region corresponding to the third cover part, the first body part having a cross-sectional area increasing toward a downstream side, and the second body part having a cross-sectional area reduced toward the downstream side.

The first body part may have a conical shape having a blunt head at an end.

A cross section of the second cover part may be parallel to a cross section of the first body part while having a predetermined gap d therebetween.

The second cover part may have a truncated cone shape, and each of the first cover part and the third cover part may have a cylindrical shape.

A cross section of the first body part may have an upward inclination angle α, and a cross section of the second body part may have a downward inclination angle β, β being greater than or equal to α.

The cross section of the second cover part may have an upward inclination angle θ, θ being the same as α.

α may be within a range of 15° to 30°, and β may be within a range of 30° to 60°.

The device may further include a support part coupled to the cover part and the insert at the other side, wherein the support part includes a cover part coupling part having an annular shape and coupled to the cover part, an insert coupling part having a disk shape and coupled to the insert, and a connecting part connecting the cover part coupling part to the insert coupling part and provided in a plurality of rod shapes.

The device may further include a cooling gas supply device for supplying a cooling gas to the insert, wherein the cooling gas supply device includes a gas supply for storing a cooling gas, a pipe disposed inside the insert and delivering the cooling gas from the gas supply to the insert, and an injection port for injecting the cooling gas inside the pipe into an upstream end of the insert.

The injection port may be provided as a choking nozzle.

An inlet diameter of the supersonic diffuser device may be greater than an outlet diameter of the rocket engine nozzle part.

When the rocket engine nozzle part and the cover are coupled to each other, an upstream end of the insert may be disposed inside the rocket engine nozzle part.

An inlet diameter Dd of the cover part may be determined based on a pressure to be simulated by the supersonic diffuser device.

A radius r of the head, which is one end of the insert, may be determined by the following expression:$r = a \frac{1}{Dd}$
(where a is a real number ranging from 0.04 to 0.25).

A length of the throat part may be determined by calculating a ratio between an area of the expansion part and an area of the throat part using a normal shock model or a passive diffuser model, by calculating an area of the second throat part based on the calculated area ratio and the area of the expansion part, and by being set to be between 5 and 8 times an inner diameter d of the second throat part based on the calculated area.

Other features and aspects will be apparent from the following detailed description, the drawings, and the claims.

### BRIEF DESCRIPTION OF THE DRAWINGS

FIG. 1 illustrates a view of a general second throat supersonic diffuser.
FIG. 2 illustrates a view of a general center-body supersonic diffuser.
FIG. 3 illustrates a view of a supersonic diffuser device according to an embodiment of the present disclosure.
FIG. 4 illustrates a view of a support part in FIG. 3 according to the present disclosure.
FIG. 5 illustrates a view of a supersonic diffuser device according to another embodiment of the present disclosure.
FIG. 6 is a cross-sectional view of the supersonic diffuser device according to an embodiment of the present disclosure.
FIG. 7 illustrates a Mach number distribution for representing a flow characteristic of an exhaust gas in the supersonic diffuser device according to an embodiment of the present disclosure.
FIG. 8 is a graph representing a pressure in a vacuum region included in an expansion part according to an embodiment of the present disclosure.

### DETAILED DESCRIPTION OF EMBODIMENTS

Hereinafter, the embodiments of the disclosure are described in detail with reference to the accompanying drawings so that those skilled in the art to which the disclosure pertains may easily practice the disclosure. However, the present disclosure may be modified in various different forms, and is not limited to the embodiments provided herein. In addition, in the drawings, portions unrelated to the description are omitted to clearly describe the present disclosure, and similar portions are denoted by similar reference numerals throughout the specification.

Throughout the specification, when one part is referred to as being "connected to" another part, one part and another part may be "directly connected to" each other, or may be "electrically connected to" each other with a third part interposed therebetween.

Throughout the specification, when one member is referred to as being disposed "on" another member, one member and another member may be in contact with each other, or a third member may be interposed between one member and another member.

Throughout the specification, "including" one component is to be understood to imply the inclusion of another component rather than the exclusion of another component, unless explicitly described to the contrary. As used throughout the specification, a term of degree such as "about", "substantially", or the like is used to indicate the number of a stated meaning or its approximation when its manufacturing or material tolerance inherent therein is given. Such a term is used to prevent unscrupulous infringers from unfairly using the present disclosure in which exact or absolute figures are stated to facilitate the understanding of this application. As used throughout the specification, a term such as a "step of(doing)" or a "step of~" does not indicate a "step for~".

Hereinafter, the embodiments of the present disclosure are described in detail with reference to the accompanying drawings and the descriptions provided below. However, the present disclosure is not limited to the embodiments described herein, and may also be embodied in another form. The same reference numerals denote the same components throughout the specification.

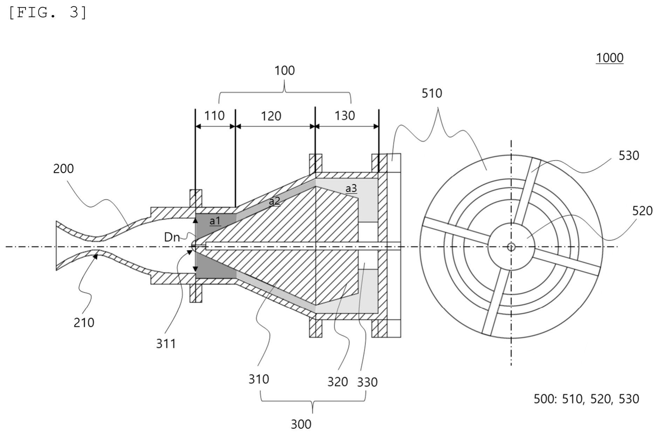

The present disclosure provides a supersonic diffuser device 1000. FIG. 3 illustrates a view of the supersonic diffuser device 1000 according to an embodiment of the present disclosure. The supersonic diffuser device 1000 may reproduce the pressure and velocity of an exhaust gas in a high-altitude environment to be used to test engine performance of a test object such as a rocket, a launch vehicle, or an airplane operated at high altitudes.

The supersonic diffuser device 1000 may have one side coupled to an engine nozzle of the test object and the other side exposed to atmosphere. In an example, the test object may be provided as a rocket, and a rocket engine nozzle part 200 may be coupled to the supersonic diffuser device 1000. The rocket engine nozzle part 200 may allow a rocket engine and the supersonic diffuser device 1000 to be coupled to each other. In an example, the rocket engine nozzle part 200 may include a throat 210 and discharge a supersonic fluid. The throat 210 of the rocket engine may serve as the primary throat 210 in a flow of the fluid discharged from the rocket engine. Hereinafter, upstream and downstream are defined based on a flow direction of the exhaust gas, which is the supersonic fluid discharged from the rocket engine nozzle part 200. For example, the upstream side refers to a side defined based on a flow direction of the supersonic fluid close to the rocket engine nozzle part 200, and the downstream side refers to a side defined based on a flow direction of the supersonic fluid relatively distant from the rocket engine nozzle part 200, respectively.

In an example, the supersonic diffuser device 1000 may include a cover part 100, an insert 300, and a support part 500. In an example, the cover part 100, the insert 300, and the support part 500 may be separable from one another. In an example, the cover part 100, the insert 300, and the support part 500 may be manufactured separately and provided for assembly. The cover part 100, the insert 300, and the support part 500 may be separable from one another, thereby being easily detachable and easily replaceable in an event of damage or malfunction.

The cover part 100 may form an outer periphery of the supersonic diffuser device 1000. The cover part 100 may have one side coupled to the rocket engine nozzle part 200 and have a hollow formed therein. The cover part 100 may have one side open to be coupled to the rocket engine nozzle part 200 and the other side open to be exposed to the atmosphere. In an example, the cover part 100 may include a first cover part 110, a second cover part 120, and a third cover part 130. Each region is divided based on an exterior of the supersonic diffuser device 1000 for convenience of description, and the cover part 100 may be integrally formed.

The first cover part 110, the second cover part 120, and the third cover part 130 may be sequentially disposed from the upstream side. In an example, a length of the cover part 100 may be provided in a descending order order of the second cover part 120, the third cover part 130, and the first cover part 110. In an example, an internal cross-sectional area of the cover part 100 may be provided in a descending order order of the third cover part 130, the second cover part 120, and the first cover part 110.

In an example, the first cover part 110 may have a cylindrical shape in which its cross-sectional area is maintained constant from the upstream side to the downstream side. A cross section of the first cover part 110 may have a flat linear shape. In an example, a diameter of the first cover part 110 may be larger than an outlet diameter of the rocket engine nozzle part 200. The reason is to promote expansion of the fluid discharged from the rocket engine nozzle part 200.

In an example, a cross section of the second cover part 120 may increase from the upstream side to the downstream side. For example, a rate of change of the cross-sectional area of the second cover part 120 may be constant. In an example, the second cover part 120 may have a truncated cone shape. The cross section of the second cover part 120 may have a linear shape having an inclination angle.

In an example, the third cover part 130 may have a cylindrical shape in which its cross-sectional area is maintained constant from the upstream side to the downstream side. A cross section of the third cover part 130 may have a flat linear shape. The cross-sectional area of the third cover part 130 may be larger than that of the first cover part 110. The third cover part 130 may be a space directly exposed to the atmosphere.

The insert 300 may be inserted into the hollow to have a predetermined gap from the cover part 100. As the insert 300 and the cover part are coupled to each other while having the gap therebetween, the insert 300 may be combined with the cover part, thereby forming a flow path of the fluid discharged from the rocket engine nozzle part 200. The insert 300 may have a predetermined inclination angle to gradually change the flow of the fluid discharged from the rocket engine nozzle part 200 and cause velocity reduction and pressure increase to occur gradually, thereby effectively simulating the high-altitude environment.

In an example, the insert 300 may include a first body part 310, a second body part 320, and a coupling part 330. In an example, the insert 300 may be integrally formed. Alternatively, the first body part 310 and the second body part 320 may be integrally formed, and the coupling part 330 may be provided separately. Alternatively, the first body part 310, the second body part 320, and the coupling part 330 may all be manufactured individually and then coupled to each other by an assembling method.

The first body part 310 may have a cross-sectional area increasing toward the downstream side. In an example, the first body part 310 may have a conical shape. In an example, a cross section of the first body part 310 may have an upward inclination angle toward the downstream side. In an example, one end of the first body part 310 disposed on the upstream side may have a blunt shape. In an example, an upstream end of the first body part 310 is referred to as a head 311. In an example, when the rocket engine nozzle part 200 and the supersonic diffuser device 1000 are coupled to each other, the head 311 may be disposed inside the rocket engine nozzle part 200. Accordingly, the hot fluid discharged from the rocket engine nozzle part 200 may come into direct contact with the insert 300. If one end of the insert 300 has a sharp shape, heat may be concentrated at a point where the high-temperature exhaust gas comes into contact with the insert 300, and the insert 300 may thus be damaged or melted by heat. Accordingly, the head 311 may have the blunt shape to prevent damage to the insert 300. In an example, after forming the first body part 310, the head 311 may be cut or trimmed to be rounded. The second body part 320 may have a cross-sectional area reduced toward the downstream side. In an example, the second body part 320 may have a truncated cone shape.

In an example, the first body part 310 may correspond to the first cover part 110 and the second cover part 120, and the second body part 320 may correspond to the third cover part 130.

The coupling part 330 may be connected to the second body part 320 and the support part 500 described below, and serve to couple the cover part 100, the support part 500, and the insert 300 to one another. In an example, the cross-sectional area of the coupling part 330 may be smaller than that of the second body part 320. In an example, the cross section of the second body part 320 may have a downward inclination angle toward the downstream side. In an example, the inclination angle of the second body part 320 may be greater than or equal to that of the first body part 310. In an example, if the cross section of the first body part 310 has an upward inclination angle α and the cross section of the second body part 320 has a downward inclination angle β, β may be greater than or equal to α.

In an example, between the cover part 100 and the insert 300, an expansion part a1, a second throat part a2, and a discharge part a3 may be formed. The expansion part a1 refers to a section defined between a first region and the insert 300, the throat part a2 refers to a section defined between a second region and the insert 300, and the discharge part a3 refers to a section defined between the third cover part 130 and the insert 300. For example, the expansion part a1 may refer to a section defined between the first region and the first body part 310, the second throat part a2 may refer to a section defined between the second cover part 120 and the first body part 310, and the discharge part a3 may refer to a section defined between the third cover part 130 and the second body part 320 and the coupling part 330.

The expansion part a1 may provide a space into which the fluid discharged from the rocket engine nozzle part 200, e.g., the exhaust gas, is introduced into the supersonic diffuser device 1000. The fluid passing through the primary throat of the rocket engine nozzle part 200 may be discharged in an under-expanded expansion state based on an expansion ratio between the throat and the outlet diameter of the rocket engine nozzle part 200, and an expansion ratio between the outlet of the rocket engine nozzle part 200 and an inlet diameter of the supersonic diffuser device 1000. Accordingly, the Mach number of the exhaust gas may increase, and a surrounding pressure may decrease, thereby maintaining a vacuum state in a vacuum region V in the expansion part a1. In the drawings, the vacuum region V denotes a region having the largest Mach number.

In the expansion part a1, the first cover part 110 may have a flat linear cross section, and the first body part 310 may have a predetermined inclination angle and a gradually increasing cross-sectional area. Accordingly, a cross-sectional area in the expansion part a1 through which the fluid flows may gradually decrease. This configuration may allow the fluid to flow into the second throat part a2 while preventing a sudden fluid pressure change. In an example, a vacuum state may be maintained at a front end of the expansion part a1, i.e., a region where the outlet of the rocket engine nozzle part 200 and the inlet of the supersonic diffuser device 1000 are disposed to be close to each other.

A cross-sectional area of the second throat part a2 may be smaller than that of the expansion part a1. Accordingly, the fluid introduced into the second throat part a2 along an inclined surface of the insert 300 may be decelerated while forming a shock wave channel. While flowing through the second throat part a2, the fluid may be decelerated from supersonic to transonic or subsonic. In the second throat part a2, the cover part 100 and the insert 300 may maintain a predetermined gap d therebetween. In an example, in the second throat part a2, the cover part 100 and the insert 300 may be parallel to each other while maintaining the predetermined gap d therebetween.

In an example, an inclination angle of a cross section of the second cover part 120 and the inclination angle of the cross section of the first body part 310 may be the same as each other. For example, if the cross section of the second cover part 120 has an upward inclination angle θ and the cross section of the first body part has the upward inclination angle α, θ = α may be established.

The reason why the inclination angle of the cross section of the second cover part 120 and the inclination angle of the cross section of the first body part 310 are the same as each other is that an inclination angle variation may cause a fluid pressure change. If the inclination angles of the cover part 100 and the insert 300 are not the same as each other in the second throat part a2, a variation in the cross-sectional area through which the fluid flows may occur, thereby destabilizing the fluid flow and changing the fluid pressure and making it difficult to control an experimental environment.

A cross-sectional area of the discharge part a3 may be larger than that of the second throat part a2. Accordingly, the fluid pressure may be recovered to an atmospheric pressure while the fluid expands in the discharge part a3, thereby maintaining a normal operation system of the supersonic diffuser device 1000. In the discharge part a3, the third cover part 130 may have a flat linear cross section, and the second body part may have a predetermined inclination angle and a gradually decreasing cross-sectional area. Accordingly, a cross-sectional area in the discharge part a3 through which fluid flows may gradually increase. This configuration may allow the fluid flow to be gradually stabilized and the pressure to be gradually recovered to the atmospheric pressure due to the gradually increasing cross-sectional area in the discharge part a3, while preventing a sudden fluid pressure change.

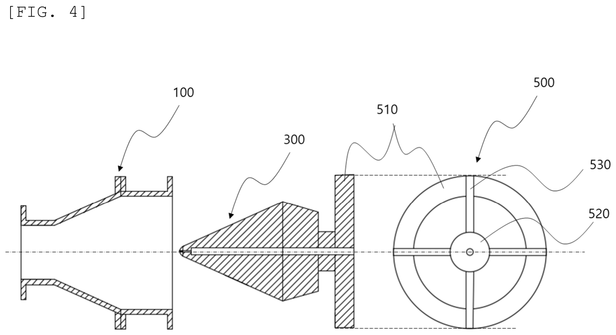

The support part 500 may be coupled to the cover part 100 and the insert 300 at the downstream side of the supersonic diffuser device 1000. The support part 500 may allow the insert 300 and the cover part 100 to be fixed and coupled to each other. FIG. 4 illustrates a view of the support part 500 in FIG. 3 according to the present disclosure. Referring to FIG. 4, the support part 500 may include a cover part coupling part 510 coupled to the cover part 100, an insert coupling part 520 coupled to the insert 300, and a connecting part 530 connecting the cover part coupling part 510 to the insert coupling part 520.

In an example, the cover part coupling part 510 may have an annular shape having a predetermined volume. In an example, the insert coupling part 520 may have a disk shape. In an example, the insert coupling part 520 may be coupled to the coupling part 330. In an example, the insert coupling part 520 may have the same shape as the coupling part 330 in an axial direction of the insert 300. In an example, the connecting part 530 may connect the cover part coupling part 510 to the insert coupling part 520, thereby allowing the insert 300 and the cover part 100 to be coupled to each other, and may also be provided as a handle to be used by a user. In an example, the connecting part 530 may be provided in a plurality of rod shapes. In an example, four connecting parts 530 may be provided at equal intervals. The fluid in the expansion part a1 may be discharged to the outside of the supersonic diffuser device 1000 by passing through an empty space disposed between the cover part coupling part 510 and the insert coupling part 520.

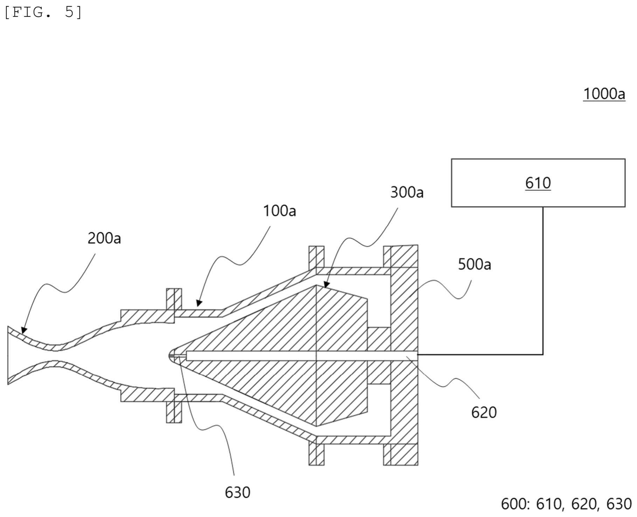

In another example, a supersonic diffuser device 1000a may further include a cooling gas supply device 600. FIG. 5 illustrates a view of the supersonic diffuser device 1000a according to another embodiment of the present disclosure. The supersonic diffuser device 1000a does not require a separate cooling device because the supersonic diffuser device 1000a is used for high-altitude simulation of a small upper-stage engine. However, the supersonic diffuser device 1000a may require a separate cooling device when used for high-altitude simulation of a medium- or large-stage upper-stage engine, or when a long-duration engine combustion test is required. In an example, the cooling device may include the cooling gas supply device 600 for supplying a cooling gas to one end of the insert 300a. In an example, the cooling gas supply device 600 may include a gas supply 610, a pipe 620, and an injection port 630. The cooling gas supply device 600 may further include a pump, a valve, and the like for supplying the cooling gas to one end of the insert 300a at a required pressure.

In an example, a gas supply 610 may be disposed outside the cover part 100a. The cooling gas may be stored in the gas supply 610. In an example, the cooling gas may include nitrogen. Alternatively, the cooling gas may include a gas such as helium, carbon dioxide, argon, or oxygen. In an example, the cooling gas may be provided at room temperature, or may be cooled in the gas supply 610 before being provided. The pipe 620 may be disposed inside the insert 300a and supply the gas from the gas supply 610 to the outside of the pipe 620. In an example, the pipe 620 may connect the gas supply 610 to one end of the insert 300a and penetrate through the support part 500a and the insert 300a. As the pipe 620 penetrates through the support part 500a and the insert 300a without being exposed to the outside, the pipe 620 may be protected from the high-temperature exhaust gas. In an example, the injection port 630 may be formed at one side of the insert 300a to allow the gas supplied through the pipe 620 to be injected into the insert 300a through the injection port 630. The injected gas may film-cool the insert 300a. In an example, the injection port 630 may have a nozzle shape. In an example, the injection port 630 may be provided as a nozzle(e.g., a choking nozzle) that uses a choking injection method.

In an example, the supersonic diffuser device 1000 may be made of a material having high heat resistance. In an example, the supersonic diffuser device 1000 may include one or a combination of stainless steel, titanium alloy, nickel alloy, ceramic composite material, carbon composite material, molybdenum, or tungsten. Alternatively, the supersonic diffuser device 1000 may be coated with one or a combination of stainless steel, titanium alloy, nickel alloy, ceramic composite material, carbon composite material, molybdenum, or tungsten. In an example, the rocket engine nozzle part 200 may be made of the same material as the supersonic diffuser device 1000.

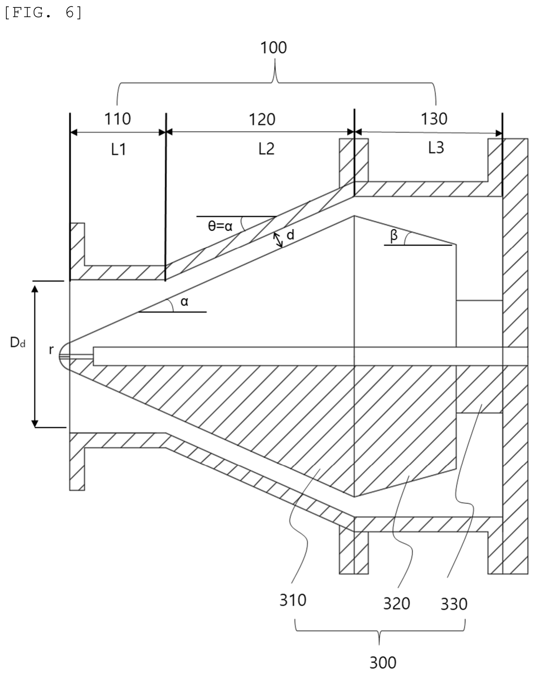

Hereinafter, referring to FIG. 6, a method for designing the supersonic diffuser device 1000 of the present disclosure is described. FIG. 6 is a cross-sectional view of the supersonic diffuser device 1000 according to an embodiment of the present disclosure.

An inlet diameter Dd of the supersonic diffuser may be determined by a pressure at an altitude to be simulated where the rocket engine is operated. If a rocket to be tested is determined, a shape of the rocket engine nozzle part 200 and a pressure at an altitude to be simulated by the supersonic diffuser device 1000 may be determined.

The exhaust gas discharged from the rocket engine nozzle part 200 may be discharged in the under-expanded expansion state based on an expansion ratio between an outlet diameter Dn of the rocket engine nozzle part 200(see FIG. 3) and the inlet diameter Dd of the supersonic diffuser. Here, the Mach number of the exhaust gas may increase, and accordingly, a pressure in the vacuum region V around a nozzle outlet may be maintained in a vacuum state. The supersonic diffuser device 1000 according to the present disclosure may serve to simulate a vacuum environment in a supersonic flow of the exhaust gas, and the inlet diameter Dd of the supersonic diffuser may thus be selected in consideration of a pressure condition at a corresponding altitude.

In an example, a length L1 of the first cover part 110 may be determined based on the inlet diameter Dd of the supersonic diffuser and a flow characteristic of the exhaust gas in the rocket engine. In addition, the length L1 may be optimized to ensure smooth flow diffusion and smooth pressure recovery, in consideration the pressure condition at the altitude to be simulated and the inclination angle α of the first body part 310. For example, the length L1 of the first cover part 110 may be determined based on a predefined value from an experiment depending on an exhaust gas condition, the pressure condition at the altitude to be simulated, and the inclination angle α of the first body part 310. An area of flow path in the expansion part a1 may be defined if the inlet diameter Dd of the supersonic diffuser, the length L1 of the first cover part 110, and the inclination angle of the first body part 310 described below are determined.

If the inlet diameter Dd of the supersonic diffuser is determined, a radius r of the head 311, which is one end of the insert 300, may be determined by a relational expression with 1/Dd. The radius r refers to a radius of the head 311, which defines a curvature of the head 311. In detail, a shape of the head 311 may gradually change from a conical shape to a rounded shape from the downstream side to the upstream side, and the radius r represents a portion of the head 311 that is deformed into the rounded shape. In an example, the radius of the head 311 may be obtained as 0.04 to 0.25 times 1/Dd. Here, the range from 0.04 to 0.25 is experimentally determined.

In an example, the length and diameter of the injection port 630 may be determined based on the temperature and heat quantity of the exhaust gas discharged from the rocket engine. In an example, the injection port 630 may be coupled to and separated from the pipe 620 as necessary. Accordingly, the appropriate injection port 630 may be used depending on the exhaust gas condition.

In an example, the inclination angles α of the first body part 310 and the second cover part 120 may be determined within a range of 15° to 30°. This angle may be selected depending on a shape of the rocket engine and the pressure condition at the altitude to be simulated. As described above, the inclination angle α of the first body part 310 and the inclination angle α of the second cover part 120 may be the same as each other.

The second throat part a2 may be designed by a method used in a general second throat supersonic diffuser, such as a normal shock model or a passive diffuser model. These models may control the supersonic flow and assist in transition from supersonic to subsonic, and may adjust the flow velocity reduction and the flow pressure recovery in the diffuser. The normal shock model may utilize a reduction in the Mach number when the supersonic flow passes through a shock wave. The normal shock model may generate the shock wave vertically to reduce the supersonic flow velocity and increase the supersonic flow pressure. The passive diffuser model refers to a model in which the flow pressure is recovered while the flow is naturally diffused. In this method, the pressure recovery and the velocity reduction may occur due to a natural flow variation without external energy input.

By using the above-described normal shock model or passive diffuser model, a ratio of an area of the second throat part a2 relative to an inlet area of the supersonic diffuser may be calculated. Here, the inlet area of the supersonic diffuser refers to the area of the expansion part a1. The area of the second throat part a2 may be calculated based on the corresponding area ratio and the area of the expansion part a1. If the area of the second throat part a2 is determined, an inner diameter d, which is a gap between the first body part 310 and the second cover part 120, may be calculated. In an example, a length L2nd of the second throat part a2 may be determined as a predetermined multiple of the inner diameter d, and determined between 5 and 8 times depending on a purpose of use. In an example, a length L2 of the second cover part 120 may be longer than the length L1 of the first cover part 110. In an example, the length L2 of the second cover part 120 may be longer than a length L3 of the third cover part 130.

In the discharge part a3, the third cover part 130 may be maintained horizontally, and the insert 300 may have the inclination angle. In an example, the second body part 320 may have the downward inclination angle β toward the downstream side, and have an inclination angle within a range of 30° to 60°, for example. In an example, an area of the discharge part a3 may be larger than the area of the expansion part a1. In an example, the length L3 of the third cover part 130 may be longer than the length L1 of the first cover part 110. The length L3 of the third cover part 130 may be determined based on the inclination angle of the second body part 320, the exhaust gas condition, or the like.

As described above, the present disclosure may design the inlet diameter Dd of the cover part based on the pressure in the high-altitude environment to be simulated. Accordingly, even without requiring a long pipe length as in a prior art, a stable vacuum region may be formed in the expansion part a1. Therefore, an overall length of a test facility may be significantly reduced, thereby enabling a high-altitude simulation test to be performed even in an environment having a limited installation space.

In addition, the length of the throat part may be determined based on the area ratio calculated using the normal shock model or the passive diffuser model and set to be within the range of 5 to 8 times the inner diameter d, thereby obtaining a high-altitude environment simulation device that efficiently transitions between supersonic and subsonic velocities in a relatively short section of the second throat part a2, while maintaining a short overall device length.

Furthermore, the inclination angles α of the first body part 310 and the second cover part 120 may be set to be the same as each other, and the inclination angle β of the second body part 320 may be set to be greater than or equal to α to stably maintain a flow cross-section change, thereby suppressing flow instability, fixing a shock wave position, and shortening a pressure recovery section. Accordingly, the overall device length may be reduced.

As a result, the present disclosure may optimize the aforementioned design variables(e.g., the inlet diameter Dd or the throat length), thereby reducing the installation space and manufacturing costs compared to a design according to the prior art, while stability ensuring both the device performance and the test environment.

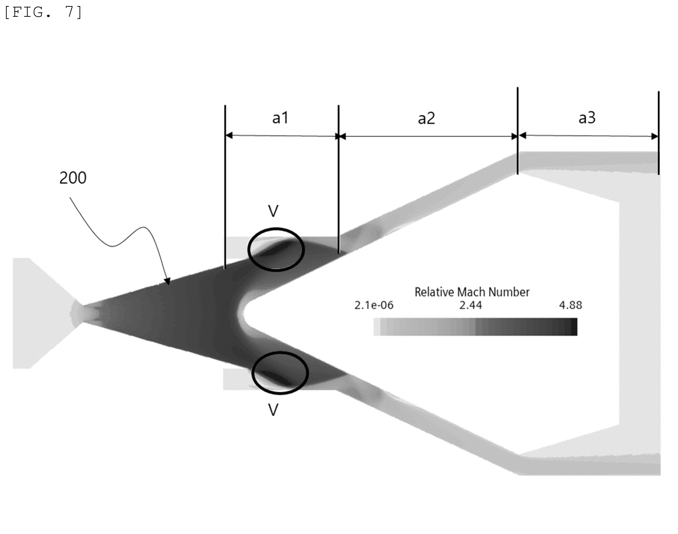

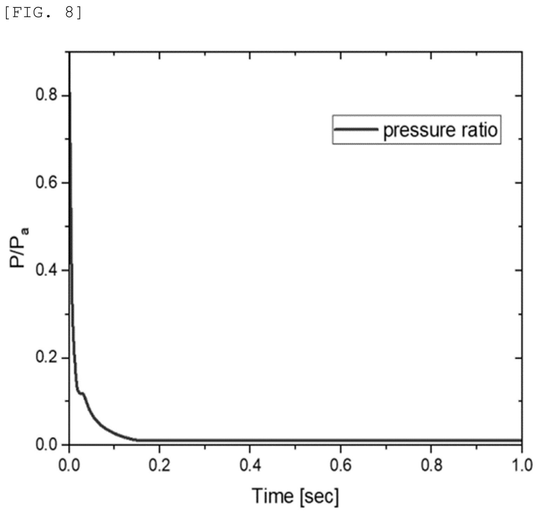

FIG. 7 illustrates a Mach number distribution for representing the flow characteristic of the exhaust gas in the supersonic diffuser device 1000 when the supersonic diffuser device 1000 is operated according to an embodiment of the present disclosure. FIG. 8 is a graph representing a pressure in the vacuum region V included in the expansion part a1 according to an embodiment of the present disclosure.

When the rocket engine is started, the exhaust gas may be discharged from the rocket engine nozzle part 200. The flow expanded along the shape of the rocket engine nozzle part 200 may be further expanded in the under-expanded state in the expansion part a1. The flow injected at the supersonic velocity may expand to increase the Mach number. As the Mach number of the exhaust gas increases, the pressure around the outlet of the rocket engine nozzle part 200 may decrease to generate the vacuum state.

Here, as illustrated in FIG. 8, the vacuum region V may maintain a low vacuum pressure and simulate a vacuum pressure corresponding to a rocket flight altitude. P refers to a pressure measured in the vacuum region V, Pa refers to an ambient pressure, and a pressure ratio refers to a value obtained by dividing P by Pa. The pressure ratio may be used as an important index for evaluating operating performance of the supersonic diffuser. In interpreting the graph, before the engine is started, when the supersonic diffuser device 1000 starts its operation in the vacuum region V, the pressure in the vacuum region V may decrease to the vacuum pressure lower than the ambient pressure. As time elapses, the vacuum pressure may gradually reach a predetermined value, which indicates that the supersonic diffuser device 1000 maintains a predetermined vacuum state. The graph visualizes vacuum performance of the supersonic diffuser device 1000 over time, and shows that the diffuser may lower the pressure from the atmospheric pressure to the vacuum pressure and stably maintain the vacuum pressure.

The expanded flow may be introduced into the second throat part a2, while forming the shock wave channel and decreasing its velocity. The flow decelerated while passing through the second throat may be decelerated from supersonic to transonic or subsonic. The decelerated flow may expand in the discharge part a3 and the flow pressure may be recovered to the atmospheric pressure, thereby maintaining the normal operation system of the insert 300 included in the supersonic diffuser.

The present disclosure may provide the supersonic diffuser device that simulates the high-altitude environment by inserting the insert 300 including two regions having different inclination angles inside the cover part 100 to adjust the velocity and pressure of the exhaust gas discharged from the rocket engine nozzle part 200.

According to the present disclosure, the high-altitude environment may be simulated even by using a simple structure, thus requiring no long pipe.

In addition, according to the present disclosure, each component may be detachable and couplable, thus making maintenance of the supersonic diffuser device easy.

In addition, according to the present disclosure, the pressure in the high-altitude environment to be simulated may be achieved based on the inclination angles and lengths of the insert 300 and the cover part 100 having the simple structure.

As set forth above, the supersonic diffuser device according to an embodiment of the present disclosure as described above may simulate the high-altitude environment without a long pipe length.

In addition, the supersonic diffuser device according to the present disclosure may be structurally simple and easily manufactured.

In addition, the supersonic diffuser device according to the present disclosure may flexibly respond to the various rocket nozzle shapes and operating conditions.

In addition, the supersonic diffuser device according to the present disclosure may efficiently control and stabilize the flow of the supersonic fluid to accurately simulate the high-altitude environment.

Advantageous effects of the disclosure are not limited to those mentioned above, and other effects not mentioned here may be clearly understood by those skilled in the art from the above description.

Although the embodiments of the present disclosure are shown and described as above, the embodiments of the present disclosure are not intended to limit the spirit of the present disclosure, but rather to describe the same. Accordingly, the spirit of the present disclosure may include not only each disclosed embodiment but also combinations of the disclosed embodiments. Furthermore, the scope of the present disclosure is not limited to these embodiments. In addition, the present disclosure may be variously changed and modified by those skilled in the art to which the present disclosure pertains without departing from the spirit and scope of the appended claims, and all such appropriate changes and modifications should be considered equivalent and fall within the scope of the present disclosure.

## Claims

1. A supersonic diffuser device(1000), which has one side coupled to a rocket engine nozzle part(200) including a throat(210) and discharging a supersonic exhaust gas and the other side exposed to atmosphere, comprising:
a cover part(100) having one side coupled to the rocket engine nozzle part(200) and having a hollow formed therein; and
an insert(300) inserted into the hollow to have a predetermined gap from the cover part(100),
wherein, between the cover part(100) and the insert(300), an expansion part(a1) in which a vacuum region (V) is formed, a second throat part(a2), and a discharge part(a3) in contact with the outside are sequentially disposed from an upstream side defined based on a flow direction of the exhaust gas.

2. The device of claim 1, wherein the cover part(100) includes,
a first cover part(110) coupled to the rocket engine nozzle part(200) and combined with the insert(300) to form the expansion part(a1),
a second cover part(120) extending from the first cover part(110) and combined with the insert(300) to form the second throat part(a2), and
a third cover part (130) extending from the second cover part(120) and combined with the insert(300) to form the discharge part(a3), and
wherein cross-sectional areas of the cover parts are sequentially provided in a descending order of the third cover part(130), the second cover part(120), and the first cover part(110).

3. The device of claim 2, wherein lengths of the cover parts are sequentially provided in a descending order of the second cover part(120), the third cover part(130), and the first cover part(110).

4. The device of claim 2, wherein the insert(300) includes
a first body part(310) disposed in a region corresponding to the first cover part(110) and the second cover part(120), and
a second body part(320) disposed in a region corresponding to the third cover part(130),
wherein the first body part(310) having a cross-sectional area increasing toward a downstream side, and the second body part(320) having a cross-sectional area reduced toward the downstream side.

5. The device of claim 4, wherein the first body part(310) has a conical shape having a blunt head(311) at an end.

6. The device of claim 4, wherein a cross section of the second cover part(120) is parallel to a cross section of the first body part(310) while having a predetermined gap(d) therebetween.

7. The device of claim 4, wherein the second cover part(120) has a truncated cone shape, and
each of the first cover part(110) and the third cover part(130) has a cylindrical shape

8. The device of claim 4, wherein a cross section of the first body part(310) has an upward inclination angle α, and a cross section of the second body part(320) has a downward inclination angle β,
β being greater than or equal to α.

9. The device of claim 8, wherein the cross section of the second cover part(120) has an upward inclination angle θ,
θ being the same as α.

10. The device of claim 8, wherein α is within a range of 15° to 30°, and β is within a range of 30° to 60°.

11. The device of claim 1, further comprising a support part(500) coupled to the cover part(100) and the insert(300) at the other side,
wherein the support part(500) includes
a cover part coupling part(510) having an annular shape and coupled to the cover part(100),
an insert coupling part(520) having a disk shape and coupled to the insert(300), and
a connecting part(530) connecting the cover part coupling part(510) to the insert coupling part(520) and provided in a plurality of rod shapes.

12. The device of claim 1, further comprising a cooling gas supply device(600) for supplying a cooling gas to the insert(300),
wherein the cooling gas supply device(600) includes
a gas supply(610) for storing a cooling gas,
a pipe(620) disposed inside the insert(300) and delivering the cooling gas from the gas supply(610) to the insert(300), and
an injection port (630) for injecting the cooling gas inside the pipe (620) into an upstream end of the insert (311).

13. The device of claim 12, wherein the injection port(630) is provided as a choking nozzle.

14. The device of claim 1, wherein an inlet diameter of the supersonic diffuser device(1000) is greater than an outlet diameter of the rocket engine nozzle part(200).

15. The device of claim 1, wherein when the rocket engine nozzle part(200) and the cover part(100) are coupled to each other, an upstream end of the insert(311) is disposed inside the rocket engine nozzle part(200).

16. The device of any one of claims 1 to 15, wherein an inlet diameter (Dd) of the cover part(100) is determined based on a pressure to be simulated by the supersonic diffuser device (1000) .

17. The device of claim 16, wherein a radius(r) of the head(311), which is one end of the insert(300), is determined by the following expression: $r = a \frac{1}{Dd}$ (where a is a real number ranging from 0.04 to 0.25).

18. The device of claim 16, wherein a length of the second throat part(a2) is determined by calculating a ratio between an area of the expansion part(a1) and an area of the second throat part(a2) using a normal shock model or a passive diffuser model, by calculating an area of the second throat part(a2) based on the calculated area ratio and the area of the expansion part(a1), and by being set to be between 5 and 8 times an inner diameter(d) of the second throat part(a2) based on the calculated area.
